# EUROPEAN PATENT APPLICATION

(11) **EP 2 792 621 A1**
(43) Date of publication of application: **22.10.2014**
(21) Application number: 12858009.9
(22) Date of filing: 10.12.2012
(51) Int. Cl.: B65G 27/08, B65G 27/04

(54) **DRUG DIVIDING DEVICE FEEDER UNIT AND TROUGH THEREOF**

(30) Priority: 12.12.2011 JP 2011271460
(71) Applicant: Takazono Technology Incorporated, Osaka 573-0128 (JP)
(72) Inventor: MATSUHISA, Yoshiki, Hirakata-shi Osaka 573-0128 (JP)
(74) Representative: Isarpatent
(86) International application number: PCT/JP2012/081914
(87) International publication number: WO 2013/089055

(57) **Abstract**

The present invention has an object to provide a feeder unit for a medicine dispensing and packing apparatus in which a trough can be easily cleaned, as well as a trough of the feeder unit. In order to achieve the object, the feeder unit includes: a vibrator (2) that generates vibrations through current application; and a trough (3) located above the vibrator (2). Medicine on the trough (3) is made feedable in one direction by transmitting the vibrations generated by the vibrator (2) to the trough (3). The vibrator (2) and the trough (3) are attachable to and detachable from each other by means of a magnetic force. The trough (3) is a component of the feeder unit.

## Description

The present application claims priority to Japanese Patent Application No. 2011-271460, the contents of which are incorporated by reference herein.

### FIELD

The present invention relates to a feeder unit for a medicine dispensing and packing apparatus that can feed medicine on a trough in one direction by vibrations, as well as a trough thereof.

### BACKGROUND

For example, a medicine dispensing and packing apparatus includes a feeder unit (see, for example, Patent Document 1). A disc-shaped rotating table is built in the medicine dispensing and packing apparatus. The rotating table includes a ring-shaped concave groove. The feeder unit is used to supply powder (medicine in powder form or granular form) onto the ring-shaped concave groove.

The feeder unit includes a trough. The trough is supported by plate springs. The trough is reciprocated in the front-back direction by an alternating magnetic field generated by an electromagnet. Supplied powder can be fed frontward on the trough by such reciprocation of the trough. Then, the powder is dropped from the trough onto the ring-shaped concave groove of the rotating table. An amount of the powder that has been dropped onto the ring-shaped concave groove is scooped, the amount corresponding to a prescription. Then, the scooped powder is dispensed and packed.

In the conventional feeder unit, a vibrator including the electromagnet and the plate springs is fixed to the trough using a screw or the like. Hence, it is difficult for an operator who uses the medicine dispensing and packing apparatus to detach the trough.

Here, different types of powder may be dispensed and packed by one medicine dispensing and packing apparatus (more specifically, different types of powder may be dispensed and packed using one rotating table). In this case, in order to avoid contamination, it is necessary to perform cleaning work for removing powder remaining inside of the medicine dispensing and packing apparatus (the trough and other internal parts) at the time of changing the types of powder.

However, the feeder unit in which the detachment of the trough is difficult as described above requires the operator to insert his/her hands into the medicine dispensing and packing apparatus and perform the cleaning work. Accordingly, the operator is forced to perform the work under conditions without a sufficient work space. Hence, the cleaning work of the trough is difficult. Further, a loss of time is significant.

In particular, dangerous powder (such as powder containing narcotic components) may be dispensed and packed depending on dispensing sites. In this case, the remaining powder needs to be completely removed after the dangerous powder is dispensed and packed. Hence, a burden on the operator who performs the cleaning work is remarkably high.

### CITATION LIST

### Patent Literature

Patent Document 1: Japanese Patent Laid-Open No. 8-156916

### SUMMARY

### Technical Problem

In view of the above, the present invention has an object to provide a feeder unit for a medicine dispensing and packing apparatus in which a trough can be easily cleaned, as well as a trough of the feeder unit. Solution to Problem

The present invention provides a feeder unit for a medicine dispensing and packing apparatus, including: a vibrator that generates vibrations through current application; and a trough located above the vibrator. Medicine on the trough is made feedable in one direction by transmitting the vibrations generated by the vibrator to the trough. The vibrator and the trough are attachable to and detachable from each other by means of a magnetic force.

Further, in the present invention, the magnetic force may act on the trough in a direction along an amplitude direction of the trough to which the vibrations are transmitted.

Further, in the present invention, the magnetic force may act on the trough in at least a front-back direction of the trough.

Further, in the present invention, the magnetic force may act on the trough in at least a top-bottom direction.

Further, in the present invention, the magnetic force may act on the trough in at least a width direction of the trough.

Further, the present invention provides a trough of a feeder unit for a medicine dispensing and packing apparatus, the trough being attachable to and detachable from a vibrator of the feeder unit for the medicine dispensing and packing apparatus. Medicine on the trough is made feedable in one direction by transmitting vibrations generated by the vibrator to the trough. The vibrator includes a magnet. The trough includes a to-be-attached portion to be attached onto the magnet.

### BRIEF DESCRIPTION OF DRAWINGS

FIG. 1 is a perspective view illustrating a feeder unit of the present embodiment.
FIG. 2 is an exploded perspective view illustrating a vibrator and a trough of the feeder unit of the present embodiment (part of an internal structure is indicated by broken lines).
FIG. 3 is a perspective view illustrating the trough of the present embodiment, which is observed from a bottom surface side.
FIG. 4A is a vertical cross-sectional view illustrating the vibrator of the feeder unit of the present embodiment.
FIG. 4B is a conceptual view illustrating the direction of a vibrational force applied to the trough.

### DESCRIPTION OF EMBODIMENTS

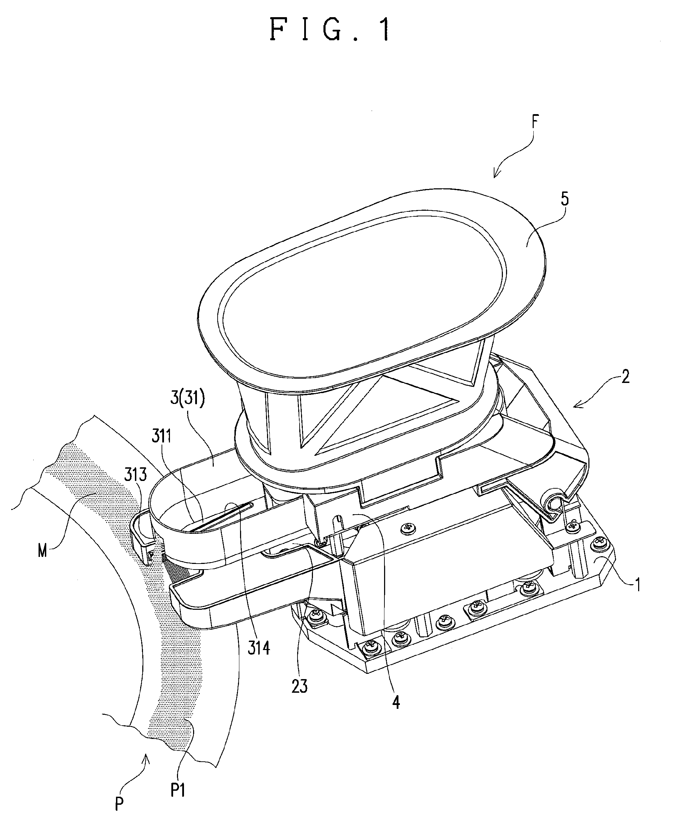

Next, the present invention is described by way of an embodiment. Note that the following description is given assuming that the right side of FIG. 1 is the back side and that the left side thereof is the front side.

As illustrated in FIG. 1, a feeder unit F of the present embodiment is used for a medicine dispensing and packing apparatus (not shown) that dispenses and packs different types of powder M in accordance with prescription data. The feeder unit F is provided such that a powder discharging opening portion 313 of a trough 3 is located above a ring-shaped concave groove P1 of a disc-shaped rotating table P built in the medicine dispensing and packing apparatus. In the present embodiment, one feeder unit F is provided for one rotating table P. Not limited thereto, a plurality of feeder units F may be provided for one rotating table P in order to enable simultaneous supply of different types of powder M, for example.

The feeder unit F includes a base 1, a vibrator 2, the trough 3, a hopper support 4, and a hopper 5. The base 1 is a substantially rectangular flat plate, and is fixed to the medicine dispensing and packing apparatus.

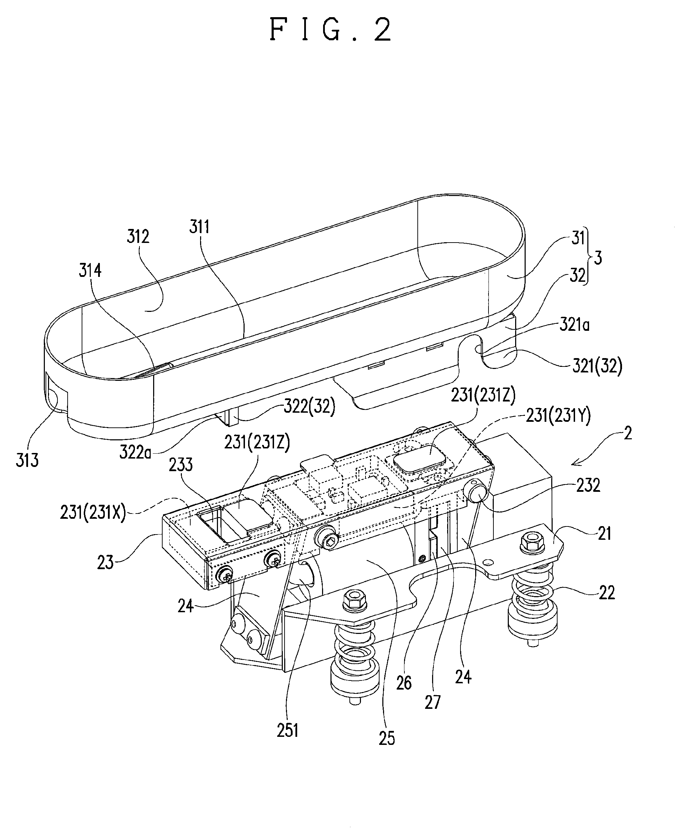

The vibrator 2 is a portion that generates vibrations to be applied to the trough 3. As illustrated in FIG. 2, the vibrator 2 includes a mount 21, mount supporting springs 22, a trough support 23, plate springs 24, an electromagnet 25, vibration-applying permanent magnets 26, and a magnet supporting bracket 27.

The mount 21 is located above the base 1 so as to be spaced apart from the base 1. The mount 21 is supported at four points by the mount supporting springs 22 (only the two points on the near side are illustrated in FIG. 1 and FIG. 2). Coil springs are used for the mount supporting springs 22. The mount supporting springs 22 isolate vibrations between the base 1 and the vibrator 2.

The trough support 23 is located parallel to the base 1. The trough support 23 has a flat upper surface. When the trough 3 is attached to the trough support 23, the upper surface of the trough support 23 abuts against a bottom surface portion of the trough 3 (specifically, the lower surface of a top plate portion 323 of an attaching/detaching bracket 32).

The trough support 23 includes attaching/detaching magnets 231 for attaching and detaching the trough 3 (the location of the attaching/detaching magnets 231 is described later). The attaching/detaching magnets 231 are, for example, neodymium magnets shaped in a block, but various permanent magnets can be used therefor, not limited to the neodymium magnets. Further, it is desirable that permanent magnets used for the attaching/detaching magnets 231 have a magnetic force strong enough (a magnetic flux density high enough) to keep the attachment state between the trough support 23 and the trough 3 (more specifically, the attachment state between the attaching/detaching magnets 231 and the attaching/detaching bracket 32) by vibrations.

The attaching/detaching magnets 231 are covered with a cover. In the present embodiment, this cover is made of resin, but may be formed using a magnetic body such as a steel plate. Further, substantially columnar positioning protrusions 232 respectively protrude from both the side surfaces in the width direction on the back side of the trough support 23. When the trough 3 is attached to the trough support 23, the positioning protrusions 232 serve to assist the positioning of the two members 23 and 3.

Further, a bracket insertion hole 233 that is rectangular in planar view is opened at a position on the front side on the upper surface of the trough support 23. When the trough 3 is attached to the trough support 23, a front-side bracket 322 of the trough 3 is inserted into the bracket insertion hole 233. The bracket insertion hole 233 can serve as a positioning reference when the trough 3 is attached to the trough support 23, together with the positioning protrusions 232. Accordingly, even under the influence of the magnetic forces of the attaching/detaching magnets 231 on the trough 3, the trough 3 can be easily attached to the trough support 23. Then, the powder discharging opening portion 313 of the trough 3 can be easily positioned above the ring-shaped concave groove P1 of the rotating table P.

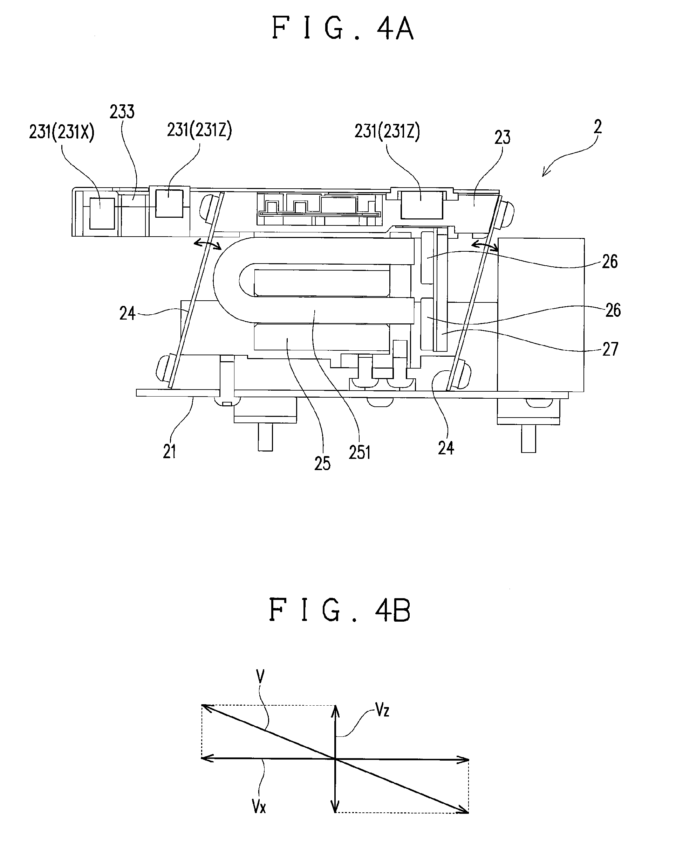

The plate springs 24 are fixed so as to be inclined with respect to the mount 21 and the trough support 23. As illustrated in FIG. 4A, the two plate springs 24 are located in parallel to each other in the front-back direction so as to sandwich the electromagnet 25, the vibration-applying permanent magnets 26, and the magnet supporting bracket 27.

The electromagnet 25 is fixed to the mount 21. As illustrated in FIG. 4A, one end of an iron core 251 of the electromagnet 25 is located on the right side of FIG. 4A, and the iron core 251 is bent in a "U" shape on the left side of FIG. 4A, and then runs toward the right side of FIG. 4A to reach another end thereof. The one end of the iron core 251 is located on the lower side, and the end thereof is located on the upper side.

The two vibration-applying permanent magnets 26 are located one above another so as to be respectively opposed to end faces of the iron core 251 of the electromagnet 25. The vibration-applying permanent magnets 26 are attached to the magnet supporting bracket 27. Then, the magnet supporting bracket 27 is fixed to the trough support 23.

According to the above-mentioned configuration, in the case where an alternating current is applied to the electromagnet 25, an alternating magnetic field is generated in the iron core 251 of the electromagnet 25. Consequently, the vibration-applying permanent magnets 26 alternately repeat attraction and repulsion with respect to the end faces of the iron core 251, at a current application frequency. Accordingly, the trough support 23 supported by the plate springs 24 reciprocates in the front-back direction. As a result, the trough 3 attached to the trough support 23 vibrates. Note that the frequency of the current application to the electromagnet 25 is controlled to a frequency at which the trough 3 vibrates at its resonance point (resonance point control). Description of a control mechanism therefor is omitted.

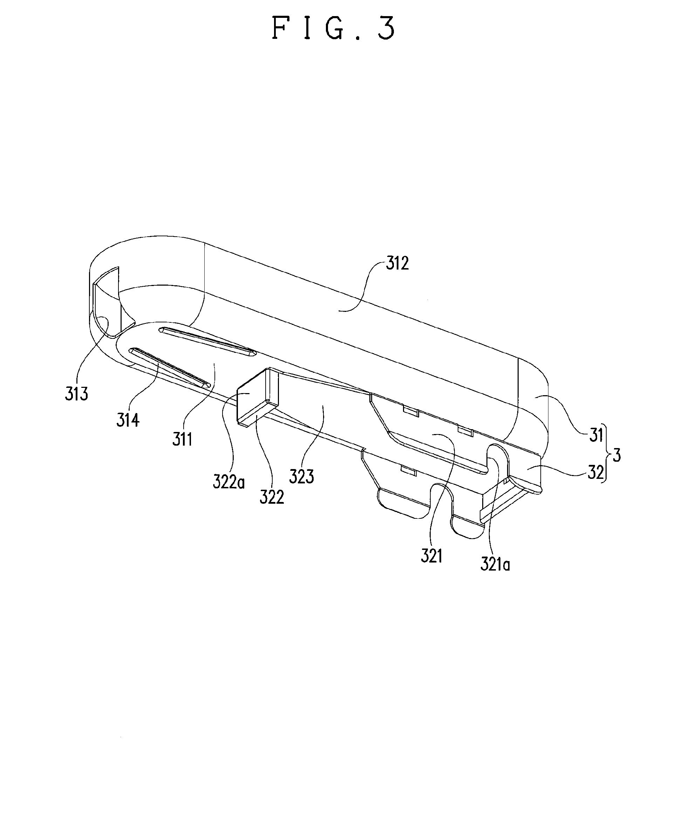

As illustrated in FIG. 2 and FIG. 3, the trough 3 includes a trough body 31 and the attaching/detaching bracket 32, which are integrally formed. The trough body 31 is oblong in planar view, and has an opened upper end and a flat bottom surface 311. As illustrated in FIG. 3, the trough 3 includes two linear protrusions 314 and 314 that protrude upward on the front side of the bottom surface 311. The distance between the linear protrusions 314 becomes smaller frontward, whereby the linear protrusions 314 regulate a flow of the powder M being moved frontward on the trough 3 by vibrations.

The trough body 31 has a space surrounded by a side wall 312, and the powder M can be put in this space. The side wall 312 is high enough not to allow the powder M to overflow from this space. Then, the powder discharging opening portion 313 penetrates through a front-side portion of the side wall 312. The powder M that has been put into the trough body 31 through the hopper 5 is moved frontward by vibrations of the trough 3 applied by the vibrator 2, and is discharged from the powder discharging opening portion 313 at an amount corresponding to the magnitude of the vibrations.

As illustrated in FIG. 3, the attaching/detaching bracket 32 is integrally provided on the lower side of the bottom surface 311 of the trough body 31. The attaching/detaching bracket 32 includes lateral side brackets 321, the front-side bracket 322, and the top plate portion 323. The attaching/detaching bracket 32 is integrally formed using steel. Then, the lateral side brackets 321, the front-side bracket 322, and the top plate portion 323 serve as a to-be-attached portion that can be attached onto the attaching/detaching magnets 231 of the vibrator 2. As illustrated in FIG. 2, one of the lateral side brackets 321 corresponds to a attaching/detaching magnet 231Y, the front-side bracket 322 corresponds to a attaching/detaching magnet 231X, and the top plate portion 323 corresponds to attaching/detaching magnets 231Z. The side brackets 321, the front-side bracket 322, and the top plate portion 323 serving as the to-be-attached portion are respectively attached onto the attaching/detaching magnets 231. The magnetic force between the to-be-attached portion and the attaching/detaching magnets 231 during this attachment restricts the to-be-attached portion and the attaching/detaching magnets 231 from: separating from each other in a direction intersecting with (for example, a direction orthogonal to) the attachment plane corresponding to the abutment plane in the attachment state; and shifting with respect to each other in a direction along (for example, a direction parallel to) the attachment plane.

The side brackets 321 of the present embodiment are respectively located at both the ends in the width direction on the back side of the trough 3. The side brackets 321 are formed so as to have an inner size in the width direction slightly larger than an outer size in the width direction of the trough support 23. Note that, as illustrated in FIG. 2, the inner size in the width direction of the side brackets 321 becomes larger in the vicinity of the lower ends thereof (becomes wider downward). This facilitates the attachment of the trough 3 to the trough support 23. That is, when the trough 3 is attached to the trough support 23, the side brackets 321 serve to assist the positioning of the trough support 23 and the trough 3. Further, each side bracket 321 includes a cutout portion 321a to be engaged with the positioning protrusion 232 when the trough 3 is attached to the trough support 23.

The front-side bracket 322 protrudes downward from the bottom surface 311 of the trough body 31 on the front side of the trough 3. The front-side bracket 322 has a cross-sectional shape slightly smaller than the bracket insertion hole 233 of the trough support 23, and is inserted into the bracket insertion hole 233 at the time of the attachment of the trough 3. As described later, because one (231X) of the attaching/detaching magnets 231 is located in the bracket insertion hole 233, a front surface 322a of the front-side bracket 322 is attached onto the attaching/detaching magnet 231X. Hence, the insertion state is reliably kept.

The hopper support 4 illustrated in FIG. 1 is a portion directly supported by the base 1. The hopper 5 is a portion that receives the powder M put by an operator, and is placed on the hopper support 4. The hopper 5 is located so as to be spaced apart from the vibrator 2 and the trough 3, and thus is not susceptible to vibrations of the vibrator 2. Further, although not shown, the position in the top-bottom direction and the angle of the hopper support 4 can be adjusted, and the amount of powder M to be fed to the trough 3 can be adjusted by adjusting the positional relationship of the hopper 5 with the trough 3.

The vibrator 2 is configured as described above. In the vibrator 2, an alternating current is applied to the electromagnet 25, whereby the trough support 23 reciprocates in the front-back direction. The plate springs 24 are inclined with respect to the bottom surface 311 of the trough 3 attached to the trough support 23. Then, the lower ends of the plate springs 24 are fixed to the mount 21. With this configuration, the upper ends of the plate springs 24 reciprocate through current application to the electromagnet 25 so as to bend about the lower ends thereof as indicated by arrows in FIG. 4A. A vibrational force V (see FIG. 4B) is applied to the trough support 23 fixed to the plate springs 24 and the trough 3 attached to the trough support 23, in a direction orthogonal to the extending direction of the plate springs 24 in the vicinity of the upper ends of the plate springs 24. That is, the application direction of the vibrational force V is inclined by an angle corresponding to the inclination of the plate springs 24 with respect to the bottom surface 311 of the trough 3. Then, the powder M existing on the trough 3 receives an upper leftward force illustrated in FIG. 4B, of the vibrational force V. Hence, the powder M existing on the trough 3 sequentially moves frontward.

Next, a configuration for making the trough 3 attachable to and detachable from the trough support 23 is described. The following description is given assuming that the front-back direction (longitudinal direction) of the trough 3 is an "X direction", that the width direction of the trough 3 is a "Y direction", and that the top-bottom direction of the trough 3 is a "Z direction".

As illustrated in FIG. 2 and FIG. 4A, the attaching/detaching magnets 231 include: one magnet (231X) having a magnetic force generating surface (a surface corresponding to a north pole or a south pole) that faces the X direction; one magnet (231Y) having a magnetic force generating surface that faces the Y direction; and two magnets (231Z) each having a magnetic force generating surface that faces the Z direction, and these magnets are located in the trough support 23. Of these magnets, the magnet (231X) that faces the X direction is attached to the inner surface of the bracket insertion hole 233 so as to face the back side. The magnet (231Y) that faces the Y direction is attached to a lateral side surface of the trough support 23 on the near side of FIG. 2. The magnets (231Z) that face the Z direction are attached to the upper surface of the trough support 23.

A magnetic force acts on the attaching/detaching magnets 231 and the attaching/detaching bracket 32, whereby the trough 3 can be attached to and detached from the trough support 23. Accordingly, for example, only the trough 3 can be washed. Hence, the trough 3 can be easily cleaned. Moreover, for example, compared with the case of making the trough 3 attachable and detachable through fitting engagement, the trough 3 is less likely to be caught on the trough support 23, and thus can be more easily attached thereto and detached therefrom. Further, compared with the case of making the trough 3 attachable and detachable through fitting engagement, a configuration for attachment and detachment can be more simplified (for example, the number of parts can be reduced). Further, if a spare trough 3 is prepared in advance, the length of time for which the supply of the powder M to the feeder unit F is stopped can be limited to only the replacement time for the troughs 3 and the cleaning time for a portion that needs to be cleaned within the medicine dispensing and packing apparatus. As a result, a loss of time can be minimized.

Then, for example, in the case of making the trough 3 attachable and detachable through fitting engagement, a minute gap exists between the trough support 23 and the trough 3, due to a difference in size for allowing the fitting engagement of the two members. The trough 3 unfavorably moves within a range of this minute gap if vibrations are applied thereto. Hence, collisions between the trough support 23 and the trough 3 at both the ends of the moving range may generate unpleasant strange noise, and may abrade the trough support 23 and the trough 3. These are disadvantageous.

In comparison, in the case of making the trough 3 attachable and detachable using a magnetic force as in the present embodiment, the magnetic force brings the trough support 23 and the trough 3 into close contact with each other in all the X, Y, and Z directions. Then, this close contact state is reliably kept within a range in which the vibrational force V (see FIG. 4B) is smaller than the magnetic force. Hence, such a strange noise generation or abrasion problem as described above can be suppressed from occurring. Further, because the magnetic force reliably keeps the close contact state between the trough support 23 and the trough 3, the behaviors of the trough support 23 and the trough 3 are integrated with each other, so that the resonance point control can be easily performed.

In particular, the attaching/detaching magnet 231X that faces the X direction can reliably fix the trough support 23 and the trough 3 in a direction along the moving direction of the powder M on the vibrating trough 3. Hence, the strange noise generation due to the unfavorable movement of the trough 3 with respect to the trough support 23 can be effectively suppressed.

Further, the attaching/detaching magnets 231Z that face the Z direction can reliably fix the trough support 23 and the trough 3 in the top-bottom direction. Hence, such a behavior that the trough 3 jumps up due to vibrations can be effectively suppressed. Then, in addition to the above, the two attaching/detaching magnets 231Z are respectively located on the back side and the front side on the upper surface of the trough support 23 so as to be spaced apart from each other. Hence, such a behavior that the trough 3 turns in planar view can also be effectively suppressed.

Further, for example, because the mount 21 is supported at four points by the mount supporting springs 22, the attaching/detaching magnet 231Y that faces the Y direction can effectively suppress irregular behaviors that occur in the trough 3 (such behaviors that the trough 3 moves in various directions, for example, such a behavior that the trough 3 turns when viewed in the front-back direction and such a behavior that the trough 3 turns in planar view).

Furthermore, with regard to the combination of the attaching/detaching magnet 231X and the attaching/detaching magnets 231Z, the magnetic force of the attaching/detaching magnet 231X that faces the X direction confronts an X-directional component Vx of the vibrational force V (illustrated in FIG. 4B) along the amplitude direction of the vibrations that are applied to the trough 3 by the reciprocation of the plate springs 24. Then, the magnetic forces of the attaching/detaching magnets 231Z that face the Z direction confront a Z-directional component Vz of the vibrational force V.

Here, an upper leftward arrow of arrows of the vibrational force V illustrated in FIG. 4B corresponds to a situation where the trough 3 is moved frontward by the trough support 23. In this situation, the front-side bracket 322 is pulled by means of the magnetic force with respect to the attaching/detaching magnet 231X. The magnetic force of the attaching/detaching magnet 231X acts such that the front-side bracket 322 is not separated from the attaching/detaching magnet 231X moving frontward together with the trough support 23. Further, in this situation, the top plate portion 323 is pulled by means of the magnetic forces with respect to the attaching/detaching magnets 231Z. The magnetic forces of the attaching/detaching magnets 231Z act such that the top plate portion 323 is not shifted with respect to the attaching/detaching magnets 231Z moving frontward together with the trough support 23.

Meanwhile, a lower rightward arrow of the arrows of the vibrational force V illustrated in FIG. 4B corresponds to a situation where the trough 3 is moved backward by the trough support 23. In this situation, the front-side bracket 322 is pushed out with respect to the attaching/detaching magnet 231X. The magnetic force of the attaching/detaching magnet 231X acts such that the front-side bracket 322 is not separated from the attaching/detaching magnet 231X by an inertia force that acts on the front-side bracket 322 at a moment at which the amplitude is reversed (the direction of the vibrational force V is reversed from lower rightward to upper leftward). Further, in this situation, the top plate 323 is pulled by means of the magnetic forces with respect to the attaching/detaching magnets 231Z. The magnetic forces of the attaching/detaching magnets 231Z act such that the top plate portion 323 is not shifted with respect to the attaching/detaching magnets 231Z moving backward together with the trough support 23.

In this way, the attaching/detaching magnet 231X mainly acts on the X-directional component Vx of the vibrational force V. Then, the attaching/detaching magnets 231Z mainly act on the Z-directional component Vz of the vibrational force V. Hence, if such a configuration as described above in which the amplitude direction of the trough 3 is considered (that is, a configuration in which the attaching/detaching magnet 231X and the attaching/detaching magnets 231Z are combined with each other) is adopted instead of a configuration in which the trough support 23 and the trough 3 are made attachable to and detachable from each other simply using a magnetic force, the close contact state between the trough support 23 and the trough 3 is reliably kept by the magnetic forces of the attaching/detaching magnets 231X and 231Z. Accordingly, the behaviors of the trough support 23 and the trough 3 are integrated with each other, so that the resonance point control can be easily performed.

Hereinabove, the present invention has been described by way of an embodiment, but embodiments of the feeder unit F according to the present invention are not limited to the above-mentioned embodiment, and can be variously changed and carried out.

For example, it is sufficient that the attaching/detaching magnets 231 be placed such that the magnetic forces thereof act on the vibrational force V. Hence, the number and location of the attaching/detaching magnets 231 are not limited to those of the present embodiment. Further, opposite to the present embodiment, the trough 3 may include attaching/detaching magnets, and the trough support 23 may include a to-be-attached portion. Further, for example, only one attaching/detaching magnet 231 may be provided, and the trough 3 may be attached to the trough support 23 using a frictional force in addition to a magnetic force.

Further, not permanent magnets but electromagnets may also be used for the attaching/detaching magnets 231. If the electromagnets are used therefor, for example, the magnetic forces thereof are caused to act in the case where the vibrator vibrates, and the magnetic forces thereof are not caused to act in other cases, whereby the trough 3 can be attached and detached without the influence of the magnetic forces. Accordingly, the trough 3 can be more easily attached and detached, compared with the case of using the permanent magnets.

Further, in the present embodiment, the operator grips the trough 3, to thereby detach the trough 3 from the trough support 23. Not limited to this configuration, the feeder unit F may include a lever for easily detaching the trough 3 from the trough support 23. Although this lever may be provided to the vibrator 2, it is desirable that this lever be provided to the base 1 or the hopper support 4 isolated from vibrations of the vibrator 2. This is because the lever itself does not cause strange noise, abnormal vibrations, and the like in the latter case.

The above description is summarized below. The present embodiment provides the feeder unit F for the medicine dispensing and packing apparatus, including: the vibrator 2 that generates vibrations through current application; and the trough 3 located above the vibrator 2. The medicine M on the trough 3 is made feedable in one direction by transmitting the vibrations generated by the vibrator 2 to the trough 3. The vibrator 2 and the trough 3 are attachable to and detachable from each other by means of a magnetic force.

According to such a configuration, the vibrator 2 and the trough 3 are attachable to and detachable from each other by means of the magnetic force. Hence, the trough 3 is easily detached from the vibrator 2.

Further, in the present invention, the magnetic force may act on the trough 3 in a direction along the amplitude direction of the trough 3 to which the vibrations are transmitted.

According to such a configuration, the magnetic force acts in a direction along the amplitude direction of the vibrating trough 3 to which the vibrations generated by the vibrator 2 are transmitted. Hence, the vibrator 2 and the trough 3 are less likely to be shifted with respect to each other. Then, strange noise deriving from the shift is less likely to be generated.

Further, in the present invention, the magnetic force may act on the trough 3 in at least the front-back direction of the trough 3.

According to such a configuration, the magnetic force acts on the trough 3 in the front-back direction. Hence, the vibrator 2 and the trough 3 are suppressed from being shifted with respect to each other. Then, strange noise deriving from the shift is less likely to be generated.

Further, in the present invention, the magnetic force may act on the trough 3 in at least the top-bottom direction.

According to such a configuration, the magnetic force acts on the trough 3 in the top-bottom direction. Hence, such a behavior that the trough 3 jumps up by vibrations can be suppressed.

Further, in the present invention, the magnetic force may act on the trough 3 in at least the width direction of the trough 3.

According to such a configuration, the magnetic force acts on the trough 3 in the width direction. Hence, such behaviors that the trough 3 moves in various directions (for example, such a behavior that the trough 3 turns in planar view) by vibrations can be suppressed.

Further, the present invention provides the trough 3 of the feeder unit F for the medicine dispensing and packing apparatus, the trough 3 being attachable to and detachable from the vibrator 2 of the feeder unit F for the medicine dispensing and packing apparatus. The medicine M on the trough 3 is made feedable in one direction by transmitting vibrations generated by the vibrator 2. The vibrator 2 includes the magnets 231. The trough 3 includes the to-be-attached portion 32 to be attached onto the magnets 231.

According to such a configuration, the magnets 231 located in the vibrator 2 of the feeder unit F and the to-be-attached portion 32 of the trough 3 of the feeder unit F make the vibrator 2 and the trough 3 attachable to and detachable from each other. Hence, the trough 3 is easily detached from the vibrator 2.

According to the present invention, because the trough 3 is easily detached from the vibrator 2 as described above, the trough 3 can be easily cleaned.

### REFERENCE SIGNS LIST

- F: feeder unit
- M: medicine, powder
- 2: vibrator
- 231: magnet, attaching/detaching magnet
- 3: trough
- 32: to-be-attached portion, attaching/detaching bracket

## Claims

1. A feeder unit for a medicine dispensing and packing apparatus, comprising:
a vibrator that generates vibrations through current application; and
a trough located above the vibrator, wherein
medicine on the trough is made feedable in one direction by transmitting the vibrations generated by the vibrator to the trough, and
the vibrator and the trough are attachable to and detachable from each other by means of a magnetic force.

2. The feeder unit for a medicine dispensing and packing apparatus according to claim 1, wherein the magnetic force acts on the trough in a direction along an amplitude direction of the trough to which the vibrations are transmitted.

3. The feeder unit for a medicine dispensing and packing apparatus according to claim 2, wherein the magnetic force acts on the trough in at least a front-back direction of the trough.

4. The feeder unit for a medicine dispensing and packing apparatus according to claim 2 or 3, wherein the magnetic force acts on the trough in at least a top-bottom direction.

5. The feeder unit for a medicine dispensing and packing apparatus according to claim 2 or 3, wherein the magnetic force acts on the trough in at least a width direction of the trough.

6. The feeder unit for a medicine dispensing and packing apparatus according to claim 4, wherein the magnetic force acts on the trough in at least a width direction of the trough.

7. A trough of a feeder unit for a medicine dispensing and packing apparatus, the trough being attachable to and detachable from a vibrator of the feeder unit for the medicine dispensing and packing apparatus, wherein
medicine on the trough is made feedable in one direction by transmitting vibrations generated by the vibrator,
the vibrator includes a magnet, and
the trough includes an to-be-attached portion to be attached onto the magnet.
